# EUROPEAN PATENT SPECIFICATION

(11) **EP 3 899 680 B1**
(45) Date of publication and mention of the grant of the patent: **24.09.2025**
(21) Application number: 19827862.4
(22) Date of filing: 19.12.2019
(51) Int. Cl.: G05D 1/00, E21B 7/02

(54) **METHOD AND DEVICE FOR DETERMINING THE POSITION OF A MINING AND/OR CONSTRUCTION MACHINE**
VERFAHREN UND VORRICHTUNG ZUR BESTIMMUNG DER POSITION EINER BERGBAU- UND/ODER BAUMASCHINE
PROCÉDÉ ET DISPOSITIF DE DÉTERMINATION DE LA POSITION D'UNE MACHINE DE CONSTRUCTION ET/OU D'EXPLOITATION MINIÈRE

(30) Priority: 20.12.2018 SE 1851620
(43) Date of publication of application: 27.10.2021
(73) Proprietor: Epiroc Rock Drills Aktiebolag, 701 91 Örebro (SE)
(72) Inventor: GUSTAVSSON, Hans, 703 78 ÖREBRO (SE); BRAY, Peter, 702 14 ÖREBRO (SE); HILDINGSSON, Arne, 692 32 KUMLA (SE); TINGÖ, Per, 695 30 LAXÅ (SE)
(74) Representative: Epiroc Rock Drills AB
(86) International application number: PCT/SE2019/051311
(87) International publication number: WO 2020/130921

(56) References cited:
- WO-A1-2008/100201
- WO-A1-2015/106799
- DE-A1- 102015 214 857
- JP-A- 2006 057 238

## Description

### Field of the invention

The present invention relates to a method and a system for determining the position of a mining and/or construction machine. The invention also relates to a mining and/or construction machine such as a drilling rig.

### Background of the invention

When drilling in rock, such as in mining, tunnelling and/or when performing rock reinforcement installations, e.g. by installation of rock bolts, it is oftentimes a desire or requirement that a correct positioning of machines, such as rock drilling rigs, can be achieved. In some applications satellite positioning systems such as e.g. GPS may be utilised, but satellite navigation is in general not available underground, and may also not always be available in surface applications, e.g. due to obstacles in the line of sight of satellites. The accuracy provided by satellite navigation systems may also not always correspond to set requirements.

A correct positioning may be desired, for example, with regard to the installation of reinforcement bolts, to ensure that rock reinforcement is, in fact, performed to an expected extent, and preferably at predetermined positions, which may have been determined to ensure that a desired reinforcement of the rock is obtained. There may also exist requirements concerning the rock reinforcement installations, e.g. with regard to the positions of installed reinforcement bolts being documented in a satisfactory manner.

Furthermore, with regard to e.g. tunnelling, a correct positioning of the rock drilling rig increases the probability that holes are drilled such that subsequent blasting ensures a resulting rock excavation that corresponds to the intended extension of the tunnel. Similarly, a correct positioning of a drill rig may reduce excavation of excess rock when excavating, for example, an ore body. For reasons of profitability it is often desirable that it can be ensured that the mining is carried out in a position where rock containing an unprofitable content of ore is not unnecessarily mined. Also, machines being utilised in concrete spraying of e.g. tunnel walls and other surface may require a correct positioning to ensure that the concrete lining is carried out to the desired extent.

Further examples of situations in which a correct positioning is desired may include e.g. LHD (Load-Haul-Dump) machines and excavation of larger cavities (galleries) in rock.

The above situations have in common that it must be possible to perform an accurate determination of the position of the drilling rigs, and the position of the drill rigs may therefore be measured accurately prior to a new round of drilling commences following a manoeuvring of the drilling rig to a new location.

This positioning may be carried out through the use of total stations in combination with prisms that are arranged in the surroundings of the drilling rig, e.g. on the rock walls. Furthermore, prisms are arranged on the drilling rig. A total station may then be set up at a location where at least two rock wall prisms are within view from the total station, and where also the prisms of the drilling rig are within view of the total station. The positioning may then be carried out in a conventional manner, e.g. by a mine surveyor determining a position of the drilling rig using the total station. The total station may alternatively comprise scanning capabilities, which allows the total station to automatically scan the surroundings to thereby identify the presence of the rock wall prisms.

When a prism has been identified, an angular direction and distance to the prism from the total station is determined. This determination is performed for at least two prisms arranged on the rock wall in the surroundings of the drilling rig.

Similarly, the prisms of the drilling rig are identified, and direction and distance to these prisms are also determined by the total station in the same manner. This data may then e.g. be transmitted from the total station to the drilling rig for processing, where a position of the drilling rig may be determined from the received data.

The resulting positioning of the drilling rig may then be used to ensure that drilling is performed at desired locations, and following a round of drilling being completed, the drilling rig may be moved to a subsequent location for drilling of a new round of holes, where the position of the drilling rig may be again determined as above to ensure that the drilling is performed at desired locations.

WO 2015/106799 A1 discloses a method for determining the position of a mining vehicle. The method may use spherical markers which are thrown by an operator into the surroundings of the vehicle. The method uses a scanner to create point clouds representing the surroundings of the vehicle, and then applies point cloud matching algorithms.

JP 2006 057238 A discloses a method for determining the position of a mining vehicle. The method may use markers placed in the surroundings of the vehicle, and the markers may be colored spheres. The positions of the coloured spheres are determined by using cameras, after which they are identified by their colour.

WO 2008/100201 A1 discloses a method for determining the position of a mining vehicle and/or construction vehicle using markers in the surroundings of the vehicle. The markers may be prisms (or other types of reflectors) or radio transmitters.

DE10 2015 214857 A1 discloses a method for creating a three-dimensional model of a production environment using laser scanning of a plurality of markers placed in the environment.

### Object of the invention and its most important features

It is an object of the present invention to provide a method and a system that makes possible an accurate and time-saving determination of the position of a mining and/or construction machine, such as for any of the above exemplified machines, and which method may also allow a positioning that may be used in navigation when the mining and/or construction machine is in motion.

This and other objects are achieved according to the present invention by a method according to claim 1.

According to the present invention, it is provided a method for determining the position of a mining and/or construction machine, wherein a first marker, at a first position, and a second marker, at a second position, the second position being different from the first position, are arranged in the surroundings of the mining and/or construction machine. At least two cameras arranged on the mining and/or construction machine are used to identify markers in the surroundings of the mining and/or construction machine.

The markers have a defined geometrical form, and the method comprises:
determining presence of the first marker and the second marker in the surroundings of the mining and/or construction machine by identifying the geometrical forms of the markers,
determining direction and distance from the mining and/or construction machine to the first and the second marker, respectively,
calculating a mutual distance between the first marker and the second marker using said determined distances and directions to the markers from the mining and/or construction machine,
identifying the first marker and the second marker by comparing the calculated mutual distance between the first and second marker with known mutual distances between markers obtained from a representation of the positions of a plurality of markers, and
determining a position of the mining and/or construction machine using the determined directions and distances to the identified first and second markers.

As was mentioned above, there oftentimes exists a general desire to be able to accurately position a mining and/or construction machine, such as, in particular, a drilling rig, which may e.g. be a drilling rig for rock excavation, such as in mining and/or tunnelling, and/or a drilling rig arranged for rock reinforcement by installation of rock bolts or other reinforcement means.

As was also mentioned above, a method for positioning the mining and/or construction machine is use of a total station, which may be set up at a distance from, but still within view of, the mining and/or construction machine and also within view of at least two prisms that e.g. may be attached to rock walls. Historically the total station has been manually operated by an operator that, using the rock wall markers and markers on the drilling rig, perform positioning of the drilling rig, but where, in order to automate this manual procedure, a system has been developed where a total station is equipped with a rotating laser scanner in order to automatically scan the surroundings. The total station is then set up by an operator, and the rotating laser is used to automatically detect reflecting prisms that reflect laser beams emitted by the rotating laser scanner.

When the rock wall prisms, as well as the drilling rig prisms, have been detected, and distances and directions to these prisms from the total station have been determined, this data is transmitted to the drilling rig, e.g. using Bluetooth or any other suitable and preferably wireless communication means.

The control system of the drilling rig uses the received data to calculate the position of the drilling rig in a coordinate system, such as a global coordinate system of the tunnel/mine. If the prisms arranged on the drilling rig have a defined position in the local coordinate system of the drilling rig, it is also possible to determine the position of a drill bit in terms of the "global" coordinate system being used in the mine/tunnel. In this way, an accurate positioning of the drill bit be obtained, and hence also accurate knowledge of e.g. rock reinforcement installations, such as bolts, may be obtained in this manner. However, although this method may provide an accurate positioning of the drilling rig, the procedure is also time-consuming.

In general, it takes minutes to perform the identification, scanning and determination of the various distances and directions using the laser scanner. This, in turn, means that following movement of the drilling rig to a new location, it will take minutes before it can be established whether the drilling rig is actually at a position from which the desired drilling may be performed, or whether the drilling rig needs to be relocated prior to drilling may commence.

Consequently, there exists a need for an improved method for positioning mining and/or construction machines, such as rock drilling rigs.

According to embodiments of the present invention, instead, it is provided a method for positioning of a mining and/or construction machine such as a drilling rig that allows determination of the position of the mining and/or construction machine in a considerable shorter period of time, and which method may also be used while the machine is in motion, and hence also be used a navigation tool.

Similar to the above, according to the present invention, markers being arranged in the surroundings of the machine are utilised in the determination of the position, where the markers may be attached e.g. to tunnel/rock walls or other suitable locations in a manner where the position of the marker is fixed and does not change. These markers, however, differs from the prior art prisms in that the markers have a defined geometrical form, i.e. the markers are three-dimensional (3D) objects.

The presence of these markers is then determined by identifying the geometrical forms of the markers, where a first marker is located at a first position, and a second marker, located at a second position different from said first position in the surroundings of the machine. According to embodiments of the invention, a two-dimensional (2D) shape of the 3D form of the marker is detected and used to identify the form and thereby presence of the marker.

A direction and distance from the mining and/or construction machine to each of the first and the second marker is determined, and a mutual distance between the first marker and the second marker, i.e. the distance between the first and second marker, is calculated using said determined distances and directions to the markers from the mining and/or construction machine.

The markers are then identified by comparing the calculated mutual distance between markers with known mutual distances between markers obtained from a representation of the positions of a plurality of markers in the surroundings of the mining and/or construction machine.

The representation of the markers may, for example, be a list representation or any other suitable representation that comprises positions for each of the markers in the surroundings of the machine. The positions may be expressed as coordinates in a coordinate system, such as, for example, a global coordinate system of the surroundings of the machine, e.g. a global coordinate system of a tunnel or mine, or any other suitable coordinate system. Given such positioning data, it is straightforward to calculate the thereby known distances between markers.

When the calculated mutual distance between the first and second marker corresponds to a known mutual distance between two markers obtained from the representation of the plurality of markers, the first and second marker may be determined to be the markers of the representation that have a corresponding mutual distance.

In this way, the identities, and hence positions, of the first and second markers can be obtained from the representation of the markers in the surroundings of the machine. The position of the mining and/or construction machine may then be determined using the determined directions and distances to the first and second markers, the positions of which being determined according to the above.

The present invention hence provides a method where the markers are identified in a manner where the markers are detected by detecting a defined form, e.g. by detecting the shape, of the marker. This allows a considerably faster detection process than other solutions, which not only shortens the time it takes from relocation of the machine until drilling may commence, but which may also be used in navigation of the machine so that, it may essentially be known already when the machine stops that the machine is in fact located at a desired location.

According to embodiments of the invention, distance and direction is determined to more than two markers, and possibly mutual distances for more than one pair of markers are determined, so that the identities, and thereby positions of, more than two markers are determined which may increase accuracy in the determination of the position of the mining and/or construction machine. In this case, the position of the mining and/or construction machine may also utilize distances and directions to more than two markers.

According to embodiments of the invention, a first image is taken using a first camera arranged on the mining and/or construction machine, and a second image is taken using a second camera arranged on the mining and/or construction machine. The cameras are displaced by a distance in relation to each other. According to embodiments of the invention, the cameras are IR cameras, or cameras provided with an IR filter. According to embodiments of the invention, other types of cameras may be used. For example, cameras being responsible to any other frequency/wavelength spectrum than Infrared radiation, such as visible light, may be used. The cameras may also be stereo cameras.

The cameras may be displaced by a distance in relation to each other in a transversal direction in relation to a longitudinal axis of the mining and/or construction machine, and/or be displaced in a longitudinal direction of said axis and/or be arranged at different heights of the mining and/or construction machine. The cameras may be configured to be directed generally in a same parallel direction, e.g. parallel to the longitudinal axis of the mining and/or construction machine. The cameras may alternatively be angled in relation to each other, and be configured to be directed inwards or outwards in relation to a vertical plane through a longitudinal axis of the mining and/or construction machine. According to embodiments of the invention, the cameras are directed along a horizontal plane of the mining and/or construction machine, but the cameras may also be angled with respect to a horizontal plane of the drilling rig, i.e. upwards or downwards.

According to embodiments of the invention, the images are configured to be taken synchronously. This is advantageous when the machine is in motion to avoid reduced accuracy caused by movement of the machine between the points in time where the images are being taken. According to embodiments of the invention, the images are, instead, taken sequentially. For example, when the machine is standing still, the images may be taken sequentially without undesired reduction in accuracy. According to embodiments of the invention, the images are selectively taken synchronously or sequentially, e.g. in dependence of whether the vehicle is in motion.

Presence of the first and second marker may then be determined by identifying the geometrical forms of the first and second marker using image processing of the images taken by the cameras. For example, the markers may exhibit a distinguishable brightness in relation to the surroundings of the marker, which may be utilised to identify a marker. This may be the case, for example, in case the markers are provided with a reflective coating.

As an alternative or in addition, when the images are taken by the cameras, the markers may be illuminated. This may be accomplished, for example by using a flash, such as an IR flash or other flash adapted to the wavelength sensitivity of the cameras, when taking the images and/or through the use of self-illuminating markers. The markers may also be configured to emit light when being hit by a flash, i.e. the self-illumination being triggered to commence by the flash. The markers may comprise a detector detecting when the marker is being hit by light of particular wavelength, and commence self-illumination in response to the detection. The self-illumination may then be maintained for a predetermined period of time, to be turned off in wait for a subsequent triggering of the self-illumination. The markers may be configured to emit light of a wavelength being suitable for detection by the cameras and facilitating distinction of the markers in relation to other objects in the surroundings of the machine. The wavelength being emitted by the markers may be IR or any other suitable wavelength, and be adapted to the sensitivity of the cameras. The markers may also be configured to be permanently illuminated, e.g. for as long as the marker is in use, which e.g. may be days or weeks. The markers may also be configured to emit identifiers, e.g. by emitting light of a particular frequency, which may then be identified e.g. in image processing, so that identification of the marker may be facilitated in this manner. The markers may also transmit e.g. radio beacons identifying the markers to thereby facilitate identification of markers that have been detected e.g. by image processing.

A distance and direction to the markers may then be determined using the positions of the markers in the images. Each marker will be located at different positions in the images taken by the cameras, due to the displacement of the cameras in relation to each other.

According to embodiments of the invention, coordinates of a reference point of, such as a centre point of, a marker in images taken by each of the cameras are determined and utilised when determining a distance to the marker. The reference point of the marker may e.g. be the centre of the 3D marker, such as the centre of a sphere.

The coordinates of the reference points of the markers may then be used to calculate a direction in relation to a reference of the camera, where the direction to the marker is calculated for each camera.

The direction may be determined in relation to a reference of the camera, where the reference may be represented by a point in the image. For example, the reference may be the axis of a lens of the camera, which may be represented by a point in the image.

A marker being located straight along the axis of the lens of the camera will be located in the middle of the image, while the further to the left a marker is in relation to the axis of the lens of the camera, the further to the left in the image will the marker be, and vice versa. Hence a direction in terms of e.g. bearing in relation to the axis of the camera, but also in terms of elevation in a similar manner, may be determined in relation to a reference axis of the camera such as, for example, the axis of the lens of the camera.

These directions and a distance between the cameras are then used to determine a distance to the marker.

The mutual distance between the first and second marker may be determined using a distance and direction to each of said first and said second marker that has been determined from the images taken by said cameras and the distance between the cameras.

In order to facilitate identification of the markers in the images, the markers may be illuminated, e.g. through the use of a flash, or self-illumination of the markers, when taking said images.

According to embodiments, in addition, the inclination of the mining and/or construction machine in a lateral and/or longitudinal direction is also used in the determination of the position of the machine. Knowledge of the inclination of the machine may reduce possibilities that markers are wrongly identified, i.e. mistaken for other markers. Also, in case the inclination is not known, there may be two possible solutions to the position of the machine. However, in case a previous position of the machine has been determined, this may be used to determine which of the possible positions that is the correct position. Also, in case one of the possible positions is determined to be e.g. inside rock, this can be used to deduce the other possible position to be the position of the machine.

The markers may also be arranged to always be on different heights with respect to each other, and or at different mutual distances, to facilitate identification of the markers.

However, in case three or more markers are identified, the position of the machine can always be correctly determined without knowledge of the inclination of the machine.

With regard to the at least first and second markers, these may have an identical geometrical form, such as a spherical form. The markers may, however also have different geometrical forms. For example, a marker may have spherical form while another marker has a cubic form or tetrahedral form. A single marker may also consist of two or more objects, such as two or more spheres, and different markers may comprise a different number of objects.

The cameras may be attached to the mining and/or construction machine in a manner such that a particular position of the camera, such as a centre of a focal plane of the camera or any other suitable position is determined in coordinates of a local coordinate system of the mining and/or construction machine. In this way, when determining the position of one or both cameras in a coordinate system of the surroundings of the machine, in principle, any position on the machine may be translated to a position expressed in the coordinate system of the surroundings of the machine. For example, in case the mining and/or construction machine is the drilling rig, positions and directions of holes being drilled may be accurately determined in coordinates of the coordinate system of the surroundings of the drilling rig.

According to embodiments of the invention, the mining and/or construction machine is a rock drilling rig comprising a carrier and one or more booms, such as one, two or three or four booms being attached to the carrier. At least one of the one or more booms may be configured to carry an associated tool, where the tool may be attached via one or more joints directly to the outer/distal end of the boom, or be displaceably arranged e.g. on a feed beam (feeder) being carried at the outer end of the boom.

The tool may e.g. be a bolt installation tool, which may comprise a drilling machine for drilling holes for reinforcing bolts, and which may also comprise means for carrying and installing rock reinforcing bolts. The tool may alternatively be e.g. a drilling machine for excavation in mining and/or tunnelling, or any other suitable kind of tool. The tool may e.g. be hydraulically or pneumatically driven.

Each of the one or more booms may be individually attached to the carrier in such a way that it can pivot in relation to the carrier via one or more articulated connections, joints, to allow raising/lowering of the boom, and/or swinging the boom to the left/right in relation to a longitudinal direction of the drilling rig.

Similarly, the tool/feeder may be attached to the outer, distal end of a boom using one or more joints, where such joints may comprise one or more hydraulic cylinders and/or one or more rotators.

According to embodiments of the invention, a feeder for carrying a tool is attached to the outer end of a boom by means of at least two rotators, each rotator comprising a motor, such as a hydraulic motor, for causing a motor output shaft to rotate, where the motor output shaft is connected to a gearbox input shaft, and where the gearbox reduces a speed of rotation of a gearbox output shaft in relation to the gearbox input shaft. A rotation of the rotator being accomplished by a rotation of the rotator motor output shaft, where the gearbox output shaft rotates in relation to the motor.

The rotators may be arranged such that the output shaft of the gearbox of one rotator is attached to the boom, and the output shaft of the gearbox of the other rotator is attached to the feeder. The rotators may be arranged in relation to each other in a manner such that there is an angle between the longitudinal axes of the rotators, where there may further be a joint between the rotators to allow this angle to change.

The drilling machine(s) may be hydraulically or pneumatically driven.

The boom(s) may be a telescopic boom to allow the boom length to be extended.

The carrier may comprise a cabin to allow an operator to control the drilling process from the cabin.

The carrier may comprise a propulsion system for propulsion/tramming of the drilling rig, where the propulsion system may comprise wheels and/or continuous tracks and one or more power sources such as one or more internal combustion engines, and/or electrical machines and or hydraulic motors for causing the propulsion of the drill rig, where the hydraulic motors, in case being used, may be driven by the internal combustion engine or electrical machine, e.g. via one or more hydraulic pumps.

The one or more power sources may also power one or more hydraulic pumps, which may be used to power the tool(s) attached to the boom(s).

The means for determining presence of the first marker, such as a stereo camera or two or more cameras, or laser scanner, may be arranged on the carrier of the drilling rig. According to embodiments of the invention, the means are, instead or in addition, arranged on a boom or feeder of the drilling rig.

The drilling rig may comprise pairs of cameras in different directions such as forwards and backwards or to the sides.

The cameras may be attached to the drilling rig such that a position of the drilling rig is determined in coordinates of a local coordinate system of the drilling rig. By determining also the inclination of the carrier, or at least taking the inclination, directly or indirectly, into account in the calculations, any position on the drilling rig may be translated to a position expressed in the coordinate system of the surroundings of the drilling rig. For example, the position of a drill bit, and thereby positions and directions of holes being drilled, may be accurately determined in coordinates of the coordinate system of the surroundings of the drilling rig.

The drilling rig may comprise a control system comprising at least one control unit, where the control unit controls various functions of the drilling rig, e.g. by suitable control of various actuators/motors/pumps etc. The calculations being performed when determining the position of the drilling rig may be performed in such a control system, e.g. by such a control unit.

Corresponding advantages are obtained by corresponding system/device features. In particular, the invention also relates to a system, where the system may comprise means for determining presence of the markers in the surroundings of the mining and/or construction machine, and means for determining direction and distance from the mining and/or construction machine to the markers. The determining of presence may be arranged to be carried out when markers are present in the surroundings of the mining and/or construction machine. The means for determining presence, such as e.g. one or more cameras or at least one laser scanner according to the above, may be arranged on the mining and/or construction machine.

The system may also comprise means for calculating the mutual distance between the markers using the determined directions and distances to the markers, and means for identifying the markers using the calculated mutual distance as described above. Also, the system may comprise means for determining the position of the mining and/or construction machine using the determined directions and distances to the identified markers. Such markers may be arranged in the surroundings of the machine for use by when determining the position of a particular machine, or for general use by various machines operating in the surroundings such as a mine or tunnel, where the position of the machines are determined by a system according to the invention. According to embodiments of the invention the system comprises the markers to be positioned in the surroundings of the machine. The system may also comprise the mining and/or construction machine, such as a drilling rig.

Further characteristics of the present invention and advantages thereof are indicated in the detailed description of exemplary embodiments set out below and the attached drawings.

### Brief description of the drawings

The invention will now be described more in detail in view of an exemplary embodiment and by means of the appended drawings, in which:
Fig. 1 schematically illustrates a rock drilling rig according to embodiments of the invention;
Fig. 2 schematically illustrates the rock drilling rig of fig. 1 from above;
Fig. 3 schematically illustrates the rock drilling rig of fig. 1 in surroundings comprising markers;
Fig. 4 illustrates an exemplary method according to the invention;
Figs. 5A-B schematically illustrates images being utilised in the determination of the position of the drilling rig according to embodiments of the invention.
Fig. 5C schematically illustrates distances and directions to markers from the drilling rig.

### Detailed description of exemplary embodiments

As was mentioned above, drilling rigs are used, for example, in tunnelling and mining. There exist various kinds of drilling rigs that may be utilised, e.g. in dependence on the task at hand. For example, large drilling rigs may be used in excavation of tunnels, where the drilling rigs may comprise a carrier and a plurality of booms, such as two or three or four, attached to the carrier, and where the booms have associated drilling machines. Such drilling rigs oftentimes drill a relatively large number of holes according to a predetermined drilling plan. Following a completed round of drilling, the drilled holes are charged with explosives for subsequent blasting. The drilling rig is then relocated, and a new determination of the position of the drilling rig is required prior to drilling of a new round of holes may commence.

With regard to ore mining, other types of drilling rigs may be utilised, where fewer holes in general are drilled in a round of drilling. Again, following a round of drilling, the drilling rig is moved to a new position for drilling, where a new determination of the position of the drilling rig is again required.

Furthermore, rock reinforcement is oftentimes performed both in mining and in tunnelling, where drilling rigs being designed for this matter may be utilised. Such rock reinforcement rigs oftentimes consist of considerably smaller rigs that typically do not remain stationary for longer periods of time before they are moved for reinforcement of a subsequent portion of the rock cavity. Similar to the above, an accurate positioning of the rock reinforcement rig is oftentimes required in order to ensure proper rock reinforcement. The periods of time drilling rigs of this kind remain stationary depend, inter alia, on requirements regarding the distance between bolts, but may e.g. be in the order of 30 minutes. Still these rigs require accurate measuring of the position, and since the determination of the position of the rig using a total station may take a long period of time, the time of measurement may correspond to a large portion of the total working time of the rig at a particular location.

According to embodiments of the invention, a method is provided that may be utilized for any of the above described kinds of drilling rigs, and also for any other kinds of mining and/or construction machines, i.e. also machines of other kinds than drilling rigs. For the sake of simplicity, however, the invention will be exemplified below with reference to a rock reinforcement drilling rig.

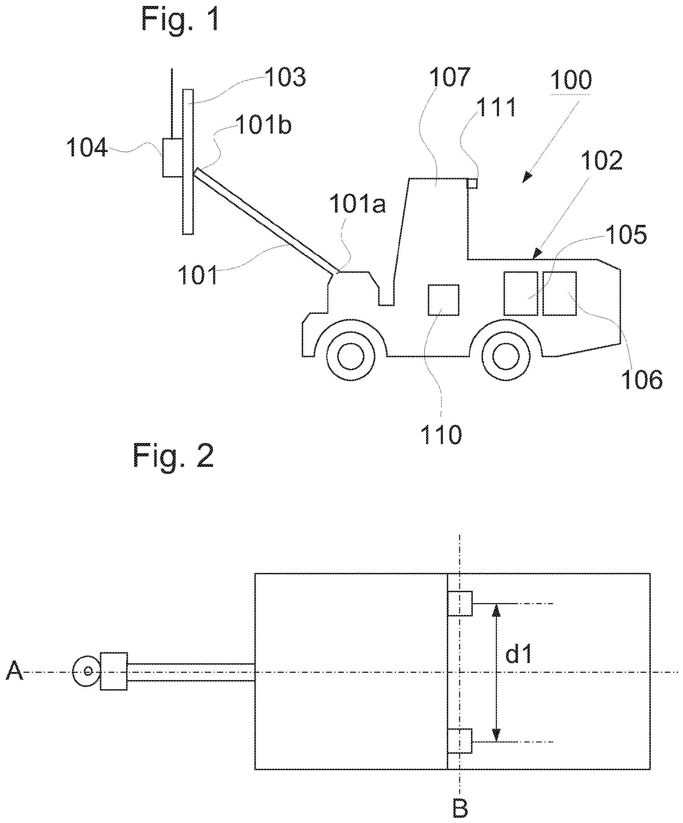

Fig. 1 schematically illustrates a drilling rig 100 for installation of rock reinforcing bolts, for example, for rock reinforcement during tunnelling or mining. The drilling rig 100 includes a boom 101, one end 101a of which being attached, according to the present example in such a way that it can pivot, in relation to a carrier 102, such as a vehicle, via one or more articulated connections, and on the other end 101b of which is arranged a feeder 103 that carries a bolt installation tool 104. The bolt installation tool 104 may be movable along the feeder 103 and may comprise a drilling machine for drilling holes for reinforcing bolts. The bolt installation tool 104 may also comprise, for example, means for carrying and installing rock reinforcing bolts. It is to be understood that the present embodiment is only exemplary, and that the drilling rig may carry any kind of tool, such as one or more drilling machines for excavation in mining and/or tunnelling. Other kinds of, and/or additional, tools may also be utilised.

Drilling rigs of the disclosed kind are known per se. The bolt installation tool 104 is, according to the present example, hydraulically driven and power supplied from one or more hydraulic pumps 105, which in turn are driven by one or more electric motors and/or combustion engines 106, also in a manner known per se. According to embodiments of the invention, the tool is instead driven pneumatically, electrically or by water. The drilling process may be controlled by an operator from a cabin 107. Alternatively, the rock drilling rig may be remotely controlled or be configured to operate autonomously.

The drilling rig 100 further comprises a control system comprising at least one control unit 110, which controls various functions of the drilling rig 100, e.g. by suitable control of various actuators/motors/pumps etc. Drilling rigs of the disclosed kind may comprise more than one control unit, where each control unit, respectively, may be arranged to be responsible for different functions of the drilling rig 100. According to embodiments of the invention, the determining of the position of the drilling rig described below may be implemented in any suitable control unit of the drilling rig, such as control unit 110. The functionality of the invention may also be divided among more than one control unit. According to embodiments of the invention, the calculations may alternatively or partially be carried out at a remote location in which case image data captured by cameras, or laser measurements discussed below, may be transmitted to a remote location for processing and/or positioning. The position/processed data may then be transmitted to the drilling rig 100 following processing, preferably by means of any suitable wireless interface. Such wireless interfaces are commonly present in mining and tunnelling.

The control unit 100 comprises a data processing unit which, based on received signals, and by means of suitable calculation perform the positioning according to the present invention described below, and can, for example, be constituted by a processor, such as a digital signal processor, which is controlled by means of a computer program product that is built into the processor or being connected thereto, such as a computer program generated by means of an appropriate programming language and being stored in a non-transitory computer memory.

Furthermore, the drilling rig 100 comprises, according to the present example, a pair of cameras 111, 112, one of which being indicated in fig. 1, and which cameras, according to the present non-limiting example, are arranged on a rear portion of the cabin 107 and being generally directed in a direction towards the rear of the drilling rig. The drilling rig 100 is schematically illustrated from above in fig. 2, and the cameras 111, 112 are, according to the present example, mounted on an upper rear portion of the cabin 107, and further at a distance *d*1 from each other in a transversal direction B in relation to a longitudinal axis A of the drilling rig 100.

The cameras 111, 112 may be fixedly attached to the drilling rig in a manner such that the cameras do not move in relation to the drilling rig 100, and be configured to be directed generally in a same parallel direction. According to the present example the cameras are being directed backwards and parallel to the longitudinal axis A. The cameras may, however, alternatively be angled in relation to each other, and hence be configured to be directed inwards or outwards in relation to a vertical plane through the longitudinal axis A of the drilling rig. Furthermore, the cameras 111, 112 may be directed along a horizontal plane of the drilling rig, but may also be angled with respect to a horizontal plane of the drilling rig, i.e. upwards or downwards. It is furthermore contemplated that the cameras may comprise means for controlling, such as by rotation, the direction of photography so that the cameras, and thereby direction of photography, may be adjusted in relation to the drilling rig. In such cases suitable means for accurately determining the change in direction of photography are preferably utilised so that the positioning of the drilling rig may still be accurately carried out by knowledge of the direction of photography in relation to e.g. the longitudinal axis A or other suitable reference. Such means may e.g. constitute any suitable kind of sensor, or be integrated in the control of the one or more joints allowing the rotation of the camera. Furthermore, the drilling rig may also be provided markers of the discussed kind, which are attached to the drilling rig in such manner that they are within the angle of view of the cameras. These markers, the position of which may be stored e.g. in the control system of the drilling rig, may then be used to calibrate the position of the cameras in the same manner as the drilling rig is positioned in the tunnel/mine. In this way, a camera may be removably attached to the drilling rig without the need for the attachment per se being calibrated using drill rig external means, since the position of the cameras following attachment may instead be determined using the markers on the drilling rig.

The cameras 111, 112 may further be configured to take IR images, e.g. through the use of a IR filter, or the cameras being IR cameras. The cameras may also be cameras being sensitive to any other frequency/wavelength spectrum such as visible light or any other suitable wavelength spectrum.

The mutual distance *d*1 between the cameras 111, 112, such as between the axes of the camera lenses, or any other suitable reference may, according to embodiments of the invention, be in the order of 0.1 m to 5m, but any other suitable distance may also be utilized, and the positioning of the cameras may be adapted, for example, to the type and size of the drilling rig to which the cameras are attached, and also to the maximum distance to markers that the cameras are expected identify. In general, the higher the distance between the cameras, the greater will the accuracy be. Furthermore, with regard to the positioning of the cameras on the drilling rig, the cameras may be aligned along a transversal axis of the drilling rig as in fig. 2, but may instead or in addition be displaced along, or in parallel to, the longitudinal axis A of the drilling rig. In this case the cameras hence need not be displaced in the transversal direction. The cameras 111, 112 may also be arranged to be attached essentially at the same height in a horizontal plane of the drilling rig, but may be displaced also in a vertical direction in respect to the horizontal plane of the drilling rig.

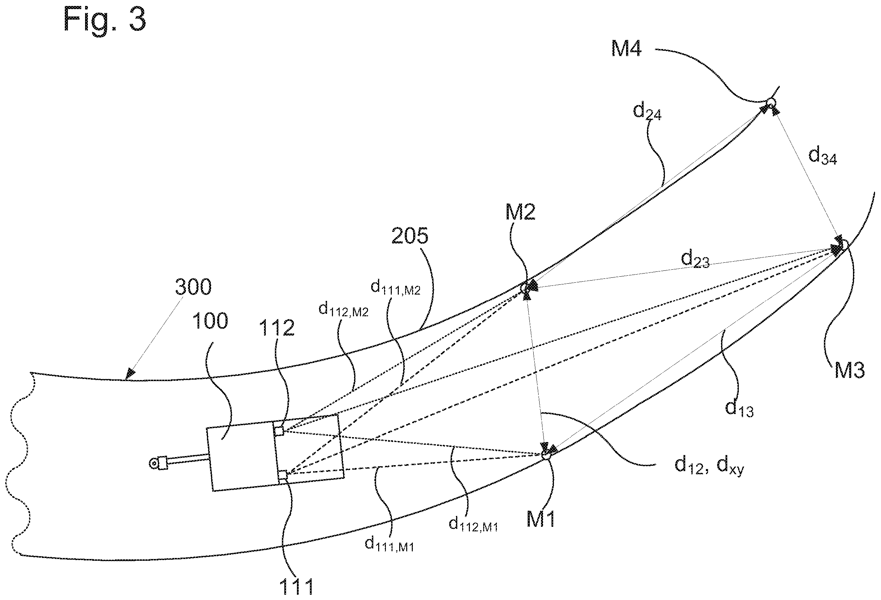

Fig. 3 discloses an exemplary embodiment of the present invention, where fig. 3 illustrates the drilling rig 100 of fig. 1 in the process of reinforcing rock in an excavated rock cavity 300 which, for example, may form part of the tunnel, and where the excavation progress towards the left in the figure. In general, when reinforcing rock, following installation of one or more rock reinforcement bolts at a first position, the drilling rig is advanced, in general in the direction of excavation, to a subsequent position for installation of rock reinforcement bolts. For example, bolts may be installed at predetermined positions along the extension of the cavity being excavated. Hence the drilling rig, following the instalment of one or more bolts at a first position, may be advanced a suitable distance, such as a predetermined number of meters, where the drilling rig is set up for further installation of rock reinforcement bolts. Hence with reference to fig. 3, rock reinforcement may have been carried out at various drilling rig locations preceding the illustrated present location. Each time the drilling rig is moved to a new position, the position of the drilling rig needs to be redetermined.

Fig. 3 also illustrates a plurality of markers M1-M4 attached to the rock surface of the cavity. The markers M1-M4 may be added and/or moved as the excavation progress and as the need arises to ensure the possibility of continued positioning of the drilling rig. The markers may be set up specifically for use by the rock reinforcement drilling rig, but may also already be in place following preceding positioning by the one or more drilling rigs performing the actual excavation, and for which positioning may be performed in the same manner as with regard to the drilling rig 100.

According to the invention, the markers M1-M4 are of a kind being different from the prisms that are generally used according to the prior art. The prior art prisms are designed to reflect incident light from a single point of reflection. The position of this single point of reflection is then determined using the laser scanner of the total station as described above. According to the present invention, on the other hand, the markers, instead, have a defined and identifiable geometrical form, where this geometrical shape may be configured to reflect light. The reflective forms may, for example, consist of spheres, but may also have any other suitable geometrical form that may be identified and distinguished from other objects in the surroundings of the machine. According to the present example, spheres are used, and the spheres may have a reflective coating. Furthermore, with regard to the markers M1-M4, these may all comprise a single sphere having the same radius, but a single marker may also comprise two or more spheres (or objects of other geometrical forms), and different markers may have different forms. The objects are hence objects having a 3D form, thereby exhibiting a defined 2D shape e.g. in an image taken by a camera as described below.

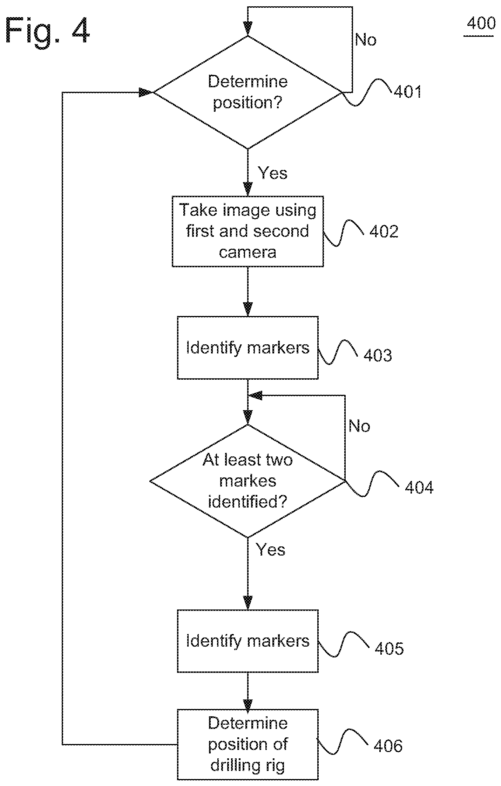

An exemplary method 400 for determining the position of the drilling rig 100 will be explained in the following with reference to fig. 4.

The method 400 starts in step 401, where it is established whether the position of the drilling rig 100 is to be determined. The determining of the position may, for example, be initiated by the drilling rig control system 110. The method remains in step 400 for as long as no determination of the position is to be made. This may be the case, for example, for as long as the drilling rig has not been set in motion since the lastly performed determination of the position. If, on the other hand, it is determined that the position of the drilling rig 100 is to be determined, the method continues to step 402. This may be the case, for example, if the drilling rig 100 has been manoeuvred to a new position for installation of rock reinforcement bolts. According to embodiments of the invention, the transition from step 401 to step 402 may also be carried out, for example, if it is determined that the drilling rig 100 is currently in motion so that positioning can be performed also while the drilling rig 100 is in motion, and the drilling rig 100 thereby be navigated while in motion using position data obtained according to embodiments of the invention. The positioning may also be initiated, for example, in case a predetermined period of time has lapsed since positioning was last performed.

According to embodiments of the invention, it is also determined whether other conditions for performing the positioning are fulfilled. For example, it may be required that drilling 100 is not currently ongoing, since vibrations generated during the drilling may decrease accuracy in the measurement results. Other requirements may also apply.

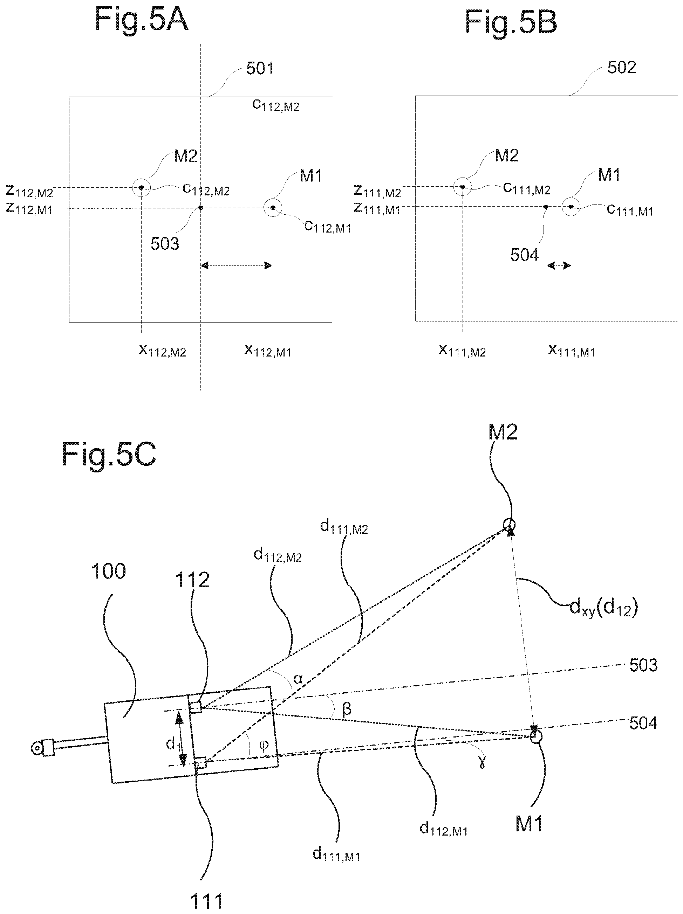

In step 403 a photo, in the present example in form of a digital image, is taken by each of the cameras 111, 112. Exemplary images 501, 502 are illustrated in figs. 5A-B and discussed further below. The images 501, 502 may be configured to be taken synchronously, i.e. at precisely, or essentially precisely, the same time with the two cameras 111, 112. This may be beneficial, for example, in case the drilling rig 100 is in motion and the determination of the position is used in navigation of the drilling rig, so that movements of the drilling rig 100 between the points in time the images are taken do not negatively impact the accuracy in the positioning. The images may also be arranged to be taken sequentially, e.g. if the drilling rig 100 is stationary. When the images have been taken, the method continues to step 403 where markers being present in the images 501, 502 are identified using image processing. The image processing may be carried out, for example, using suitable processing means in the control unit 110.

Figs. 5A-B illustrates an example of images taken by the cameras 111, 112. Fig. 5A illustrates an image taken by camera 112 and fig. 5B illustrates an image taken by camera 111. The figures illustrate the image representation of the markers M1, M2 only. The images are highly simplified, and for reasons of simplicity only the markers M1, M2, are disclosed. In principle, at least marker M3, at least if within reach of the cameras, 111, 112, should also be present in the figures. It is, however, contemplated that the calculations below are performed for more than one pair of markers, e.g. to increase certainty and/or possibly accuracy in the determination. It may be advantageous, however, to utilise the markers being closest to the drilling rig 100 to reduce measurement errors. The images, or any suitable digital representation thereof, are analysed to identify the markers. This is performed by identifying the geographical shapes of the markers captured by the images.

As was mentioned, the markers are preferably reflective e.g. by a reflective coating. This may facilitate detection of the markers. In particular, the detectability may be enhanced by the cameras 111, 112 using a flash, which may be an IR flash, or otherwise illuminating the markers when taking the images. In this way, differences in brightness in the images may be used to facilitate detection of the markers.

The images may be pixel analysed, and when the analysing software identifies presence of a marker by detecting its shape, which may be performed by an area of the image having similar brightness forming the 2D shape of the marker. It is also contemplated that the images may be turned into negatives prior to performing the image processing in case this would facilitate the image processing.

When it has been determined, step 404, that at least two markers have been identified in each of the images, the method continues to step 405 where the positions of the markers are determined.

This is performed by determining a mutual distance between the markers. In the image processing, a centre point of the shape, or form, of the marker is determined in terms of position in a coordinate system of the image. This is illustrated in fig. 5A and fig. 5B, where x and z positions of the centres of the markers M1, M2 are illustrated, where image 501 of fig. 5A is taken by camera 112, and where image 502 of fig. 5B is taken by camera 111.

For example, with regard to marker M1, the coordinates of the centre *c*_{112,*M*1} of marker M1 in the image taken by camera 112 is *x*_{112*,M*1} , *z*_{112,*M*1}. This centre point may represent the centre point of the 2D shape, but may also represent the centre point of the 3D form, i.e. the centre of the sphere. An advantage of using e.g. spheres as markers is that the identified centre in the 2D shape will also represent the coordinates of the centre of the sphere even without explicit knowledge of the size of the sphere. It is, however, also contemplated that other points of the identified objects may be utilised. When the centre of the sphere (or other 3D object is used as position in the representation of the markers, it is not necessary to know the actual size of the marker, since the size need not be utilised in the calculations.

In general, images have a resolution where each pixel have a given size and which would impose limitations on the determination of the coordinates of the centre point and the radius/diameter of the marker. However, analysis software of the kind of suitable for use herein may be capable of, through pixel analysis, determine the centre position at a higher resolution than is provided by the pixel resolution of the image. For example, in reality, a marker may be offset by half, or other portion of a pixel, and such offsets may be identified using suitable image processing thereby increasing the accuracy in the positioning. There exists commercially available software for performing image analysis according to the above, and hence such software may be integrated in a system according to the present invention.

Since the cameras are spaced apart on the drilling rig 100, the images will differ in terms of where the centres of the markers M1, M2 are located in the images. The reason for this is the difference in angles from the cameras to the markers, respectively, which is indicated by the dashed and dotted lines in fig. 3 and also in fig. 5C. For example, the angular direction to marker M1 is different from camera 111 with respect to the angular direction of camera 112.

The difference in position in the images is indicated in figs. 5A-5B, where in particular the x-axle positions differ. That is, *X*_{112,*M*2} differs from *X*_{111,*M*2} and *X*_{112*,M*1} differs from *X*_{111*,M*1} in relation to a centre 503, 504 of the images. Similarly, the distances in the z direction may differ from each other, in particular if the drilling rig e.g. is inclined. That is, *Z*_{112,*M*2} may differ from *Z*_{111,*M*2} and *Z*_{112,*M*1} may differ from *Z*_{111*,M*1}*.* These differences in pixel positions in the images are used according to embodiments of the invention to determine a distance and direction to the markers from the cameras 111, 112, and hence from the drilling rig 100.

A digital image is in general made up of rows and columns of pixels, and a coordinate of a pixel can be specified by the column and row that contains the pixel, and the direction from a camera to a marker may be determined using the pixel position, where, as stated, the pixel position of e.g. a centre of a marker may be determined to higher accuracy than provided by a pixel.

The determined coordinates of the centres, in this case, of the markers M1, M2, together with the distance *d*1 between the cameras 111, 112 is used to calculate the distances *d*_{112,*M*2}, *d*_{111*,M*2} *,d*_{112*,M*1}*, d*_{111,*M*1} to the markers M1, M2 from the cameras 111, 112. This may be performed in a straight forward manner using conventional geometry, since the distance *d*1 between the cameras is known, and the angles α, β, γ, φ, to the markers M1, M2 from a reference direction of the cameras, see fig. 5C where the direction is represented by the centres 503, 504 of the images, may be calculated from the coordinates of figs. 5A, 5B.

For example, the distances *d*_{111,*M*2}, *d*_{112,*M*2} may be calculated using the distance *d*1 and the angles α, φ. Similarly, the distances *d*_{111,*M*1}, *d*_{112,*M*1} may be calculated using the distance *d*1 and the angles β, γ.

Given the known distance *d*1 between the cameras 111, 112 arranged on the drilling rig 100, and the determined distances and directions from the cameras 111, 112 to the markers M1, M2, a mutual distance between the not yet identified markers M1 and M2, *d_{xy}* may be determined in a straightforward manner, e.g. using straightforward geometrical/vector calculus. As is to be understood, the order in which calculations are performed is not relevant to the invention. Also, expressions in the calculations where e.g. the end result directly is the distance *d_{xy}* may be utilised where conventional mathematics so allow.

When the distance *d_{xy}* between the yet unidentified markers M1, M2 has been calculated, this distance *d_{xy}* is used to identify the markers M1, M2. According to embodiments of the invention, the calculated distance *d_{xy}* is compared with known distances between known markers in the tunnel/mine. In this case, a representation of the known markers in the tunnel/mine that are arranged e.g. on the cavity walls is utilized. This representation, may, for example, consist of a listing of the positions of the markers, e.g. expressed in xyz coordinates of the global coordinate system of the tunnel/mine. These positions may e.g. be represented by the centre of the marker, such as the centre of the sphere in the present example.

In principle, positions of all markers that are presently setup for use in the tunnel/mine, expressed in the coordinate system of the mine, can be stored in a memory. These coordinates may then be used to calculate the known distances between mutual pairs of markers, such as distances *d*₁₂, *d*₁₃, *d*₂₃, *d*₂₄, *d*₃₄ in fig. 3. The obtained distance *d_{xy}* may then be compared with these known distances determined from the representation of the markers. The known mutual distances between markers of the representation of markers may be calculated as the calculations are being performed, but the mutual distances between pairs of markers may also be configured to already be present in the representation of the markers, so that comparisons with the obtained distance *d_{xy}* may directly be performed. When a mutual distance is found that matches the distance *d_{xy},* such as distance *d*₁₂, the markers of this mutual distance, i.e. markers M1, M2, may be considered to be the markers identified in the images of figs. 5A-B.

In case more than two markers are identified in the images, more than one mutual distance between markers may be utilized, and in this way certainty may be increased, since a potential hit in the identity of the markers can be validated by further mutual distances. For example, with regard to fig. 3, in case the marker M3 is also identified, the mutual distances *d*₁₃, *d*₂₃ can be used to increase certainty that the detected markers are in fact markers M1, M2.

If, however, it is concluded that more than one pair of markers provide a possible solution, the positions of the markers can be compared with the last known position of the drilling rig, and if the last known position of the drilling rig is in the vicinity of a pair of the markers, this pair can be assumed to be the markers that have been identified in the images with a high degree of certainty, since drilling rigs seldom are moved any particularly long distances between measurements. Alternatively, or in addition, information regarding which portions have been excavated and which portions of the tunnel mine consist of rock can be stored, and if a possible position is found to be within solid rock this position can be excluded. The data containing the positions/coordinates of the markers in the surroundings of the drilling machine can be provided to the drilling rig in any suitable manner, for example by using a memory card such as a flash memory, or by wireless transmissions. Each time a marker is removed or a new marker is added to the surroundings of the drilling machine this data may be updated. This also applies to which portions of the mine/tunnel that have been excavated.

When the markers M1, M2 have been identified, and the coordinates of the markers M1, M2 in the global coordinate system of the surroundings of the drilling rig hence are known, the method continues to step 406, where the position of the drilling rig 100 is determined.

This can be performed in a straightforward manner by determining the positions of the cameras 111, 112 in the global coordinate system of the tunnel/mine using the known coordinates of the markers M1, M2, and the already determined distances and directions to the markers from the cameras. In principle, it may be sufficient to determine the position of one of the cameras in relation to the markers in order to obtain the coordinates of the camera in the global coordinate system of the tunnel/mine.

Furthermore, the positions, coordinates, of the cameras 111, 112, when fixedly attached to the drilling rig, are preferably stored in the control system of the drilling rig, with coordinates defined in a local/internal coordinate system of the drilling rig. Drilling rigs of the kind disclosed in fig. 1 often have an internal coordinate system that is being used, for example, for controlling booms and drilling machines, so that e.g. the position of a drill bit/tool can be determined in relation to a zero, or reference point of the drilling rig to thereby allow determination of the precise location and direction of a drilled hole and/or bolt installation. The coordinate system may hence comprise a reference point, which consists of any suitable point from which the internal coordinate system of the rig originates, any other suitable position on the drilling rig, preferably being a position of the carrier and hence not on a part being attached to the carrier by means of one or more joints. The position of the cameras 111, 112, which may be fixedly attached to the drilling rig, and in particular e.g. a position of a lens, such as a centre point of a lens and/or a centre point of a film plane of the camera, may be defined in the local coordinate system of the drilling rig, where also the directions in which the cameras are directed in relation to the coordinate system of the drilling rig may be stored.

This has as result that when determining the position of one or both cameras 111, 112 in the global coordinate system of the tunnel/mine according to the above, the rig reference point position in the coordinate system of the tunnel/mine may also be determined, with a very accurate determination of the position of the rig as a result. Since the directions of the cameras can be determined from the distances and directions to the markers, the direction of the drilling rig, including any lateral/longitudinal inclination, can also be determined in a conventional manner utilising the drilling rig internal coordinate system to determine a position of the drill bit and hence also of e.g. drilled holes and bolts being installed, which may then be transformed to coordinates of the global coordinate system of the tunnel/mine in a straightforward manner.

According to embodiments of the invention, the inclination of the drilling rig in terms of lateral and/or longitudinal inclination may hence be determined using the established positions of the cameras. As the positions of the cameras are known in the local coordinate system of the drilling rig the inclination can be calculated from knowledge of the cameras in the global coordinate system.

According to embodiments of the invention, however, the drilling rig is also provided with inclination sensor means, which measures the lateral and/or longitudinal inclination of the drilling rig 100. The inclination sensor means can, for example, consist of a gyro, or one or more acceleration sensors. In this case, inclination data can be utilized in the positioning of the drilling rig, thereby establishing an inclination of an axis passing through e.g. a centre point of the cameras in relation to the global coordinate system of the mine to thereby facilitate identification of markers being identified by the cameras. However, as was mentioned, such sensors need not be necessary since the inclination of the drilling rig may instead be determined by determining the inclination of the cameras in relation to the markers through the image analysis. Knowledge of the rig inclination may, however, simplify the positioning, in particular when there are only two markers being identified.

When the position of the drilling rig has been determined in step 406, the method returns to step 401 to determine whether the position of the drilling rig is to be determined again, which may be the case, for example, when the drilling rig is in motion. The present invention provides a solution for determining the position of a drilling rig that is capable of performing accurate positioning in a short period of time. The identification of a geometrical shape according to the invention is considerably faster than scanning for prisms and detecting a single spot that reflects light of a prism. The invention also provides further features in that, for example, the geometrical form of the markers may be different for different markers, thereby directly providing an identity of a marker. For example, a marker may comprise two or more spheres to be identifiable also by the configuration of the marker. Furthermore, although spherical markers have been exemplified, any suitable geometrical form may be utilized such as, for example cubes, tetrahedrons etc. or any combination of different geometric forms. However, as was stated above, spheres may provide advantages over other geometrical forms.

Furthermore, the positioning has been exemplified above in a manner where distinct steps are being performed. It is to be understood, however that one or more of these steps may be simultaneously performed when the mathematics allow. For example, the positions of the camera in the global coordinate system need not be explicitly determined but coordinate transformations may be performed such that the global coordinates of the drilling rig reference point is instead directly obtained. All such alterations of the calculations and coordinate transformations are within the skills of the person skilled in the art.

Consequently, a very accurate determination of the position of the drilling rig can be performed. Further, this determination of the position can be used in any suitable manner. For example, the determination of the position according to the above can be used to ensure that drilling is performed precisely at the intended position. Since the positioning may be performed in very short periods of time the positioning can also be used when navigating the drilling rig. In this way, it may e.g. be determined that the drilling rig is approaching a desired position so that the drilling rig may be stopped precisely where desired. The time-efficient positioning according to embodiments of the invention also has the advantage that waiting times between the time the drilling rig reaches a position for drilling and a time when drilling actually can commence may be reduced to a minimum and hence increase productivity.

Furthermore, the setting out of new markers in the surroundings of the drilling rig when required to allow determination of the position, can be performed using embodiments of the invention by setting up a new marker in a situation when the position of the drilling rig is known and then determine the position of the new marker in a manner similar to the above. The position in terms of global coordinates may then be stored in the control system, and may also be transmitted to a remote location, e.g. for download to other machines. In principle, it is hence possible for an operator of the rig to set out new markers when required as the drilling/excavation progresses.

So far, the invention has been described according to embodiments where two cameras are utilized in the determination of the position of the drilling rig. It is also contemplated that more than two cameras are utilized. For example, the drilling rig may comprise pairs of cameras in different directions such as forwards and backwards or to the sides. According to embodiments of the invention, however, cameras are not at all used. Instead, a laser scanner may be utilized, essentially a laser of the kind used in the prior art but where the laser does not scan for prisms but instead scans for the geometrical forms of the markers. The laser scanner then measures reflected light from a plurality of points on the marker, so that the geometrical shape/form may be identified using processing of the signals received by the laser. The markers may also be configured to emit light that is detectable by the scanning laser. Since the laser scanner need not scan for a particular reflecting point of a prism but instead may scan for shapes, the identification of the marker may be performed considerably faster than according to the prior art use of lasers. Furthermore, the distances are automatically detected by such scanners, which simplifies the determination once a marker has been identified. Embodiments according to this solution hence provides advantages similar to the above. In this case, use of a single laser scanner is sufficient. Also similar to the above, it may be beneficial to have knowledge of the drilling rig inclination when performing the positioning.

## Claims

1. Method for determining the position of a mining and/or construction machine (100), wherein a first marker (M1-M4), at a first position, and a second marker (M1-M4), at a second position, the second position being different from the first position, are arranged in the surroundings of the mining and/or construction machine (100)and have respective, defined geometrical form, the method **characterised by:**
taking a first image (502) using a first camera (111) arranged on the mining and/or construction machine (100), taking a second image (501) using a second camera (112) arranged on the mining and/or construction machine (100), the second camera (112) being located at a distance (*d*₁) from the first camera (111), and determining presence of the first marker (M1-M4) and the second marker (M1-M4) in the surroundings of the mining and/or construction machine (100) by identifying the geometrical forms of the first and second markers (M1-M4) in said images,
determining direction and distance from the mining and/or construction machine (100) to the first and the second marker, respectively, utilising the position of said markers in said images,
calculating a mutual distance between the first marker (M1-M4) and the second marker (M1-M4) using said determined distances and directions to the markers from the mining and/or construction machine (100),
identifying the first marker (M1-M4) and the second marker (M1-M4) by comparing the calculated mutual distance (*d_{xy}*) between the first and second marker with known mutual distances between markers obtained from a representation of the positions of a plurality of markers, and
determining a position of the mining and/or construction machine (100) using the determined directions and distances to the identified first and second markers (M1-M4).

2. Method according to claim 1, further including:
identifying the geometrical forms of the first marker and the second marker in the surroundings of the mining and/or construction machine (100) by identifying a two-dimensional geometrical shape of a three-dimensional geometrical form of the markers (M1-M4).

3. Method according to claim 1 or 2,
wherein the representation of the positions of the plurality of markers (M1-M4) comprises coordinates of said plurality of markers (M1-M4) in a coordinate system of the surroundings of the mining and/or construction machine (100), and
wherein said known distances are determined from said coordinates.

4. Method according to any of the claims 1-3, further including, when determining a distance and direction to one of said first and second marker:
determining coordinates of a reference point of the marker (M1-M4) in each of said images, and
determining the distance to a marker (M1-M4) from said mining and/or construction machine (100) utilising said determined coordinates of the reference point of the marker (M1-M4) in each of said images and the distance (*d*₁) between said first (111) and second (112) camera.

5. Method according to claim 4, further including, when determining a direction to one of said first and said second marker from one of said cameras:
calculating the direction from the coordinates of the reference point of the marker (M1-M4) in the image and a reference point of the image.

6. Method according to anyone of the claims 1-5, further including:
determining the mutual distance between the first and second marker using a determination of a distance and direction to each of said first and said second marker from at least one of said first (111) and second (112) cameras.

7. Method according to any one of the claims 1-6, further including, when taking said images:
illuminating said first and second markers, e.g. through the use of a flash or self-illumination of the markers, when taking said images.

8. Method according to any one of the preceding claims, further including:
determining the position of the mining and/or construction machine when the mining and/or construction machine is in motion, and
using the determination of the position of the mining and/or construction machine in navigation of the mining and/or construction machine while being in motion.

9. Method according to any one of the preceding claims, wherein:
the representation of the positions of a plurality of markers is a representation of markers arranged in the surroundings of the mining and/or construction machine.

10. System for determining the position of a mining and/or construction machine (100) in a surrounding comprising a first marker (M1-M4) at a first position, and a second marker (M1-M4) at a second position, the second position being different from the first position, **characterised in that** the system comprises:
a first camera (111) and a second camera (112) arranged on the mining and/or construction machine (100) for, when said first and second marker are present in the surrounding, determining presence of the first marker (M1-M4) and the second marker (M1-M4) in the surroundings of the mining and/or construction machine (100) by identifying geometrical forms of the markers (M1-M4),
means for determining direction and distance from the mining and/or construction machine (100) to the first and the second marker, respectively, utilising the positions of said markers in said images,
means for calculating a mutual distance between the first marker (M1-M4) and the second marker (M1-M4) using said determined distances and directions to the markers from the mining and/or construction machine (100),
means for identifying the first marker (M1-M4) and the second marker (M1-M4) by comparing the calculated mutual distance (*d_{xy}*) between the first and second marker with known mutual distances between markers obtained from a representation of the positions of a plurality of markers, and
means for determining a position of the mining and/or construction machine (100) using the determined directions and distances to the identified first and second markers (M1-M4).

11. Mining and/or construction machine **characterised in that** it comprises a system according to claim 10.

12. Mining and/or construction machine according to claim 11, **characterised in that** it is a drilling rig.

## Patentansprüche

1. Verfahren zur Bestimmung der Position einer Bergbau- und/oder Baumaschine (100), wobei eine erste Markierung (M1-M4) an einer ersten Position und eine zweite Markierung (M1-M4) an einer zweiten Position, wobei die zweite Position von der ersten Position verschieden ist, in der Umgebung der Bergbau- und/oder Baumaschine (100) angeordnet sind und jeweils eine definierte geometrische Form aufweisen, wobei das Verfahren **gekennzeichnet ist durch:**
Aufnehmen eines ersten Bildes (502) unter Verwendung einer ersten Kamera (111), die an der Bergbau- und/oder Baumaschine (100) angeordnet ist, Aufnehmen eines zweiten Bildes (501) unter Verwendung einer zweiten Kamera (112), die an der Bergbau- und/oder Baumaschine (100) angeordnet ist, wobei sich die zweite Kamera (112) in einem Abstand (*d*₁) von der ersten Kamera (111) befindet, und Bestimmen eines Vorhandenseins der ersten Markierung (M1-M4) und der zweiten Markierung (M1-M4) in der Umgebung der Bergbau- und/oder Baumaschine (100) **durch** Identifizieren der geometrischen Formen der ersten und der zweiten Markierung (M1-M4) in den Bildern,
Bestimmen einer Richtung und eines Abstands von der Bergbau- und/oder Baumaschine (100) zur ersten bzw. zweiten Markierung unter Verwendung der Position der Markierungen in den Bildern,
Berechnen eines gegenseitigen Abstands zwischen der ersten Markierung (M1-M4) und der zweiten Markierung (M1-M4) unter Verwendung der bestimmten Abstände und Richtungen zu den Markierungen von der Bergbau- und/oder Baumaschine (100),
Identifizieren der ersten Markierung (M1-M4) und der zweiten Markierung (M1-M4) durch Vergleichen des berechneten gegenseitigen Abstands (*d_{xy}*) zwischen der ersten und der zweiten Markierung mit bekannten gegenseitigen Abständen zwischen den Markierungen, die aus einer Darstellung der Positionen einer Vielzahl von Markierungen erhalten werden, und
Bestimmen einer Position der Bergbau- und/oder Baumaschine (100) unter Verwendung der bestimmten Richtungen und Abstände zu der identifizierten ersten und zweiten Markierung (M1-M4).

2. Verfahren nach Anspruch 1, weiter einschließend:
Identifizieren der geometrischen Formen der ersten Markierung und der zweiten Markierung in der Umgebung der Bergbau- und/oder Baumaschine (100) durch Identifizieren einer zweidimensionalen geometrischen Form einer dreidimensionalen geometrischen Form der Markierungen (M1-M4).

3. Verfahren nach Anspruch 1 oder 2,
wobei die Darstellung der Positionen der Vielzahl von Markierungen (M1-M4) Koordinaten der Vielzahl von Markierungen (M1-M4) in einem Koordinatensystem der Umgebung der Bergbau- und/oder Baumaschine (100) umfasst, und
wobei die bekannten Abstände aus den Koordinaten bestimmt werden.

4. Verfahren nach einem der Ansprüche 1-3, weiter einschließend, wenn ein Abstand und eine Richtung zu einer der ersten und der zweiten Markierung bestimmt wird:
Bestimmen von Koordinaten eines Referenzpunkts der Markierung (M1-M4) in jedem der Bilder, und
Bestimmen des Abstands zu einer Markierung (M1-M4) von der Bergbau- und/oder Baumaschine (100) unter Verwendung der bestimmten Koordinaten des Referenzpunkts der Markierung (M1-M4) in jedem der Bilder und des Abstands (d₁) zwischen der ersten (111) und der zweiten (112) Kamera.

5. Verfahren nach Anspruch 4, weiter einschließend, wenn eine Richtung zu einer der ersten und der zweiten Markierungen von einer der Kameras bestimmt wird:
Berechnen der Richtung aus den Koordinaten des Referenzpunkts der Markierung (M1-M4) im Bild und einem Referenzpunkt des Bildes.

6. Verfahren nach einem der Ansprüche 1-5, weiter einschließend:
Bestimmen des gegenseitigen Abstands zwischen der ersten und der zweiten Markierung unter Verwendung einer Bestimmung eines Abstands und einer Richtung zu jeder der ersten und der zweiten Markierung von mindestens einer der ersten (111) und der zweiten (112) Kamera.

7. Verfahren nach einem der Ansprüche 1-6, weiter einschließend, wenn die Bilder aufgenommen werden:
Beleuchten der ersten und der zweiten Markierung, beispielsweise durch die Verwendung eines Blitzes oder von Selbstbeleuchtung der Markierungen beim Aufnehmen der Bilder.

8. Verfahren nach einem der vorstehenden Ansprüche, weiter einschließend:
Bestimmen der Position der Bergbau- und/oder Baumaschine, wenn die Bergbau- und/oder Baumaschine in Bewegung ist, und
Verwenden der Bestimmung der Position der Bergbau- und/oder Baumaschine in einer Navigation der Bergbau- und/oder Baumaschine während sie in Bewegung ist.

9. Verfahren nach einem der vorstehenden Ansprüche, wobei:
die Darstellung der Positionen einer Vielzahl von Markierungen eine Darstellung von im Umfeld der Bergbau- und/oder Baumaschine angeordneten Markierungen sind.

10. System zum Bestimmen der Position einer Bergbau- und/oder Baumaschine (100) in einer Umgebung, umfassend eine erste Markierung (M1-M4) an einer ersten Position und eine zweite Markierung (M1-M4) an einer zweiten Position, wobei sich die zweite Position von der ersten Position unterscheidet, **dadurch gekennzeichnet, dass** das System umfasst:
eine erste Kamera (111) und eine zweite Kamera (112), die an der Bergbau- und/oder Baumaschine (100) angeordnet sind, um, wenn die erste und zweite Markierung in der Umgebung vorhanden sind, ein Vorhandensein der ersten Markierung (M1-M4) und der zweiten Markierung (M1-M4) in der Umgebung der Bergbau- und/oder Baumaschine (100) durch Identifizieren der geometrischen Formen der Markierungen (M1-M4) zu bestimmen,
Mittel zum Bestimmen einer Richtung und eines Abstands von der Bergbau- und/oder Baumaschine (100) zur ersten bzw. zweiten Markierung unter Verwendung der Positionen der Markierungen in den Bildern,
Mittel zum Berechnen eines gegenseitigen Abstands zwischen der ersten Markierung (M1-M4) und der zweiten Markierung (M1-M4) unter Verwendung der bestimmten Abstände und Richtungen zu den Markierungen von der Bergbau- und/oder Baumaschine (100),
Mittel zum Identifizieren der ersten Markierung (M1-M4) und der zweiten Markierung (M1-M4) durch Vergleichen des berechneten gegenseitigen Abstands (*d_{xy}*) zwischen der ersten und der zweiten Markierung mit bekannten gegenseitigen Abständen zwischen den Markierungen, die aus einer Darstellung der Positionen einer Vielzahl von Markierungen erhalten werden, und
Mittel zum Bestimmen einer Position der Bergbau- und/oder Baumaschine (100) unter Verwendung der bestimmten Richtungen und Abstände zu der identifizierten ersten und zweiten Markierung (M1-M4).

11. Bergbau- und/oder Baumaschine **dadurch gekennzeichnet, dass** sie ein System nach Anspruch 10 umfasst.

12. Bergbau- und/oder Baumaschine nach Anspruch 11, **dadurch gekennzeichnet, dass** sie eine Bohranlage ist.

## Revendications

1. Procédé de détermination de la position d'une machine (100) d'exploitation minière et/ou de construction, dans lequel un premier marqueur (M1-M4), à une première position, et un second marqueur (M1-M4), à une seconde position, la seconde position étant différente de la première position, sont agencés dans l'environnement de la machine (100) d'exploitation minière et/ou de construction et ont une forme géométrique définie respective, le procédé étant **caractérisé par :**
la prise d'une première image (502) à l'aide d'une première caméra (111) agencée sur la machine (100) d'exploitation minière et/ou de construction, la prise d'une seconde image (501) à l'aide d'une seconde caméra (112) agencée sur la machine (100) d'exploitation minière et/ou de construction, la seconde caméra (112) étant située à une distance *(d₁)* de la première caméra (111), et la détermination de la présence du premier marqueur (M1-M4) et du second marqueur (M1-M4) dans l'environnement de la machine (100) d'exploitation minière et/ou de construction en identifiant les formes géométriques des premier et second marqueurs (M1-M4) dans lesdites images,
la détermination d'une direction et d'une distance depuis la machine (100) d'exploitation minière et/ou de construction jusqu'au premier et au second marqueur, respectivement, en utilisant la position desdits marqueurs dans lesdites images,
le calcul d'une distance mutuelle entre le premier marqueur (M1-M4) et le second marqueur (M1-M4) en utilisant lesdites distances et directions déterminées jusqu'aux marqueurs depuis la machine (100) d'exploitation minière et/ou de construction,
l'identification du premier marqueur (M1-M4) et du second marqueur (M1-M4) en comparant la distance mutuelle calculée (*d_{xy}*) entre le premier et le second marqueur avec des distances mutuelles connues entre des marqueurs obtenues à partir d'une représentation des positions d'une pluralité de marqueurs, et
la détermination d'une position de la machine (100) d'exploitation minière et/ou de construction à l'aide des directions et distances déterminées jusqu'aux premier et second marqueurs (M1-M4) identifiés.

2. Procédé selon la revendication 1, incluant en outre :
l'identification des formes géométriques du premier marqueur et du second marqueur dans l'environnement de la machine (100) d'exploitation minière et/ou de construction en identifiant une configuration géométrique bidimensionnelle d'une forme géométrique tridimensionnelle des marqueurs (M1-M4).

3. Procédé selon la revendication 1 ou la revendication 2,
dans lequel la représentation des positions de la pluralité de marqueurs (M1-M4) comprend des coordonnées de ladite pluralité de marqueurs (M1-M4) dans un système de coordonnées de l'environnement de la machine (100) d'exploitation minière et/ou de construction, et
dans lequel lesdites distances connues sont déterminées à partir desdites coordonnées.

4. Procédé selon l'une quelconque des revendications 1 à 3, incluant en outre, lors de la détermination d'une distance et d'une direction jusqu'à l'un desdits premier et second marqueurs :
la détermination de coordonnées d'un point de référence du marqueur (M1-M4) dans chacune desdites images, et
la détermination de la distance jusqu'à un marqueur (M1-M4) depuis ladite machine (100) d'exploitation minière et/ou de construction en utilisant lesdites coordonnées déterminées du point de référence du marqueur (M1-M4) dans chacune desdites images et la distance (*d*₁) entre ladite première caméra (111) et ladite seconde caméra (112).

5. Procédé selon la revendication 4, incluant en outre, lors de la détermination d'une direction vers l'un desdits premier et second marqueurs depuis l'une desdites caméras :
le calcul de la direction à partir des coordonnées du point de référence du marqueur (M1-M4) dans l'image et d'un point de référence de l'image.

6. Procédé selon l'une quelconque des revendications 1 à 5, incluant en outre :
la détermination de la distance mutuelle entre le premier et le second marqueur à l'aide d'une détermination d'une distance et d'une direction jusqu'à chacun dudit premier marqueur et dudit second marqueur depuis au moins l'une desdites première (111) et seconde (112) caméras.

7. Procédé selon l'une quelconque des revendications 1 à 6, incluant en outre, lors de la prise desdites images :
l'éclairage desdits premier et second marqueurs, par exemple par utilisation d'un clignotement ou d'un auto-éclairage des marqueurs, lors de la prise desdites images.

8. Procédé selon l'une quelconque des revendications précédentes, incluant en outre :
la détermination de la position de la machine d'exploitation minière et/ou de construction lorsque la machine d'exploitation minière et/ou de construction est en mouvement, et
l'utilisation de la détermination de la position de la machine d'exploitation minière et/ou de construction lors de la navigation de la machine d'exploitation minière et/ou de construction en mouvement.

9. Procédé selon l'une quelconque des revendications précédentes, dans lequel :
la représentation des positions d'une pluralité de marqueurs est une représentation de marqueurs agencés dans l'environnement de la machine d'exploitation minière et/ou de construction.

10. Système de détermination de la position d'une machine (100) d'exploitation minière et/ou de construction dans un environnement comprenant un premier marqueur (M1-M4) à une première position, et un second marqueur (M1-M4) à une seconde position, la seconde position étant différente de la première position, **caractérisé en ce que** le système comprend :
une première caméra (111) et une seconde caméra (112) agencées sur la machine (100) d'exploitation minière et/ou de construction pour, lorsque lesdits premier et second marqueurs sont présents dans l'environnement, déterminer la présence du premier marqueur (M1-M4) et du second marqueur (M1-M4) dans l'environnement de la machine (100) d'exploitation minière et/ou de construction en identifiant des formes géométriques des marqueurs (M1-M4),
des moyens de détermination de direction et la distance depuis la machine (100) d'exploitation minière et/ou de construction jusqu'aux premier et second marqueurs, respectivement, en utilisant les positions desdits marqueurs dans lesdites images,
des moyens de calcul d'une distance mutuelle entre le premier marqueur (M1-M4) et le second marqueur (M1-M4) en utilisant lesdites distances et directions déterminées jusqu'aux marqueurs depuis la machine (100) d'exploitation minière et/ou de construction,
des moyens d'identification du premier marqueur (M1-M4) et du second marqueur (M1-M4) en comparant la distance mutuelle calculée (*d_{xy}*) entre le premier et le second marqueur avec des distances mutuelles connues entre des marqueurs obtenues à partir d'une représentation des positions d'une pluralité de marqueurs, et
des moyens de détermination d'une position de la machine (100) d'exploitation minière et/ou de construction à l'aide des directions et distances déterminées jusqu'aux premier et second marqueurs (M1-M4) identifiés.

11. Machine d'exploitation minière et/ou de construction **caractérisée en ce qu'**elle comprend un système selon la revendication 10.

12. Machine d'exploitation minière et/ou de construction selon la revendication 11, **caractérisée en ce que** celle-ci est un engin de forage.
